**Europäisches Patentamt**

**European Patent Office**

**Office européen des brevets**

(11) Numéro de publication: **0 283 332**
**B1**

(12) **FASCICULE DE BREVET EUROPEEN**

(45) Date de publication du fascicule du brevet:
**04.07.90**

(21) Numéro de dépôt: **88400262.7**

(22) Date de dépôt: **05.02.88**

(51) Int. Cl.⁵: **B60T 8/42**

(54) **Circuit hydraulique de freinage pour véhicule automobile équipé d'un dispositif d'antiblocage de roues.**

(30) Priorité: **26.02.87 FR 8702539**

(43) Date de publication de la demande:
**21.09.88 Bulletin 88/38**

(45) Mention de la délivrance du brevet:
**04.07.90 Bulletin 90/27**

(84) Etats contractants désignés:
**DE ES GB IT**

(56) Documents cités:
**DE-A- 3 147 149**
**GB-A- 2 071 245**
**GB-A- 2 161 231**
**GB-A- 2 163 503**

**PATENT ABSTRACTS OF JAPAN,**
**vol. 10, no. 118 (M-475)[2175], 2 mai 1986; &**
**JP-A-60 248 467 (AKEBONO BRAKE KOGYO**
**K.K.) 09-12-1985**

(73) Titulaire: **BENDIX France Société Anonyme dite:,**
**126, rue de Stalingrad, F-93700 Drancy(FR)**

(72) Inventeur: **Kervagoret, Gilbert, 5 Impasse Nobleterre,**
**F-95100 Argenteuil(FR)**

(74) Mandataire: **Luziau, Roland et al, Division Technique**
**Service Brevets Bendix Europe 126, rue de Stalingrad,**
**F-93700 Drancy(FR)**

ACTORUM AG

## Description

La présente invention est relative à un circuit hydraulique de freinage pour véhicule automobile équipé d'un dispositif d'antiblocage de roues et, plus particulièrement, à un tel circuit dans lequel le dispositif d'antiblocage est conçu pour pouvoir être superposé simplement à un circuit hydraulique de freinage classique.

Lors des phases de fonctionnement en antiblocage d'un tel circuit, le conducteur du véhicule perçoit des oscillations de la pédale de frein qui correspondent aux périodes d'admission et de détente de liquide de freinage dans les freins. Ces oscillations surprennent le conducteur non averti et peuvent même s'avérer gênantes, surtout sur les sols de basse adhérence.

On connaît par EP-A 181 156 un dispositif de commande d'antiblocage de roues conçu pour pallier cet inconvénient. Ce dispositif comprend un agencement de sources de pression et d'électrovalves qui sont commandées chacune par une sortie d'un calculateur. Cependant les modes de réalisation décrits dans ce document font appel à un nombre d'électrovalves tel que leur réalisation est relativement coûteuse.

La présente invention a donc pour but de réaliser un circuit hydraulique de freinage pour véhicule automobile équipé d'un dispositif d'antiblocage de roues, ce circuit étant conçu pour filtrer les réactions sur la pédale de frein des variations de pression du liquide de freinage en fonctionnement antiblocage à l'aide de moyens simples et de réalisation peu coûteuse.

Le document GB-A 2 071 245 qui corresponde au preambule de la revendication 1 décrit un tel circuit hydraulique de freinage pour véhicule automobile équipé d'un dispositif d'antiblocage de roues comprend un maître-cylindre actionné par un servo-frein commandé par une pédale, au moins un frein associé à une roue du véhicule, une électrovalve pour fermer normalement le circuit de freinage et pour, sous la commande du dispositif d'antiblocage, détendre la pression dans le frein de roue en mettant celui-ci en communication avec des moyens de stockage du liquide de freinage du circuit. Ce circuit comprend un premier clapet anti-retour pour isoler le maître-cylindre des pulsations de la pression dans le circuit lors d'une période de fonctionnement du dispositif d'antiblocage et un deuxième clapet anti-retour placé dans une branche du circuit connecté entre la sortie du frein de roue et celle du maître-cylindre, en amont du premier clapet, pour permettre le retour du liquide dans le maître-cylindre au relâchement de la pression sur la pédale de frein.

Les moyens de stockage du liquide de freinage comprennent un premier accumulateur, une pompe connectée à la sortie "détente" de l'électrovalve, et un deuxième accumulateur haute pression connecté entre la sortie de la pompe et le premier clapet anti-retour, la pompe étant mise en route par le dispositif de commande d'anti-blocage en même temps que l'électrovalve, de manière que la pression du fluide dans le deuxième accumulateur provoque la fermeture du clapet et donc l'isolement du maître-cylindre.

Le circuit décrit dans GB-A 2 071 245 ne permet pas de faire remonter doucement la pression dans les freins de roue lorsque le fonctionnement du dispositif en anti-blocage cesse, et nécessite deux électrovalves.

La présente invention a pour but d'obvier à ces inconvénients. Elle s'applique donc à un circuit hydraulique de freinage pour véhicule automobile équipé d'un dispositif d'antiblocage de roues, ce circuit comprenant:

– un maître-cylindre commandé par une pédale, et au moins un frein associé à une roue du véhicule,

– un élément de filtrage pour isoler le maître-cylindre des pulsations de la pression générées dans le circuit lors du fonctionnement du dispositif d'antiblocage,

– une électrovalve ayant un premier, un deuxième et un troisième orifice, les premier et deuxième orifices étant connectés pour fermer normalement le circuit de freinage et les deuxième et troisième orifices étant connectés pour, sous la commande du dispositif d'antiblocage, détendre la pression dans le frein de roue connecté au deuxième orifice en mettant celui-ci en communication, par l'intermédiaire du troisième orifice, avec un premier accumulateur et l'entrée d'une pompe dont la sortie est connectée à un deuxième accumulateur et à l'élément de filtrage, la pompe étant mise en route par le dispositif de commande d'anti-blocage en même temps que l'électrovalve, de manière que la pression du fluide dans le deuxième accumulateur provoque la fermeture du clapet et donc l'isolement du maître-cylindre.

Selon l'invention, le circuit comprend une valve pilotée sensible à la détente de la pression dans le frein de roue, cette valve pilotée comprenant une soupape ayant une tête et une extrémité opposée à ladite tête, et définissant une première chambre où se trouve un ressort qui charge ladite soupape vers la position d'ouverture, cette première chambre communiquant avec la frein de roue et avec le deuxième orifice de la électrovalve, et une seconde chambre que cette tête de la soupape en position de fermeture sur son siège, partage en un premier et un second compartiments, le premier compartiment dont la section efficace sur la soupape est supérieure à celle du second compartiment, étant relié au maître cylindre, et le second compartiment étant relié au premier orifice de l'électrovalve, une restriction étant prévue entre le deuxième accumulateur et le second compartiment de la seconde chambre.

Selon un mode de réalisation de l'invention, le premier compartiment est relié au maître-cylindre par l'intermédiaire de l'élément de filtrage, et au deuxième accumulateur, et les premier et second compartiments sont reliés ensemble par l'intermédiaire de la restriction.

Cet élément de filtrage est constitué soit par un clapet anti-retour, soit par une restriction.

Lorsque cet élément de filtrage est un clapet anti-retour, on place un deuxième clapet anti-retour dans une branche du circuit connectée entre le frein de roue et le maître-cylindre de manière à permettre le retour du liquide vers le maître-cylindre par l'intermédiaire du deuxième clapet anti-retour.

Au dessin annexé donne seulement à titre d'exemple:
- la Figure 1 est un schéma d'un premier mode de réalisation du circuit hydraulique de freinage suivant l'invention;
- la Figure 2 est un graphe qui illustre le filtrage des réactions sur la pédale obtenu à l'aide du circuit de la Figure 1; et
- la Figure 3 est un schéma d'un deuxième mode de réalisation du circuit de freinage suivant l'invention.

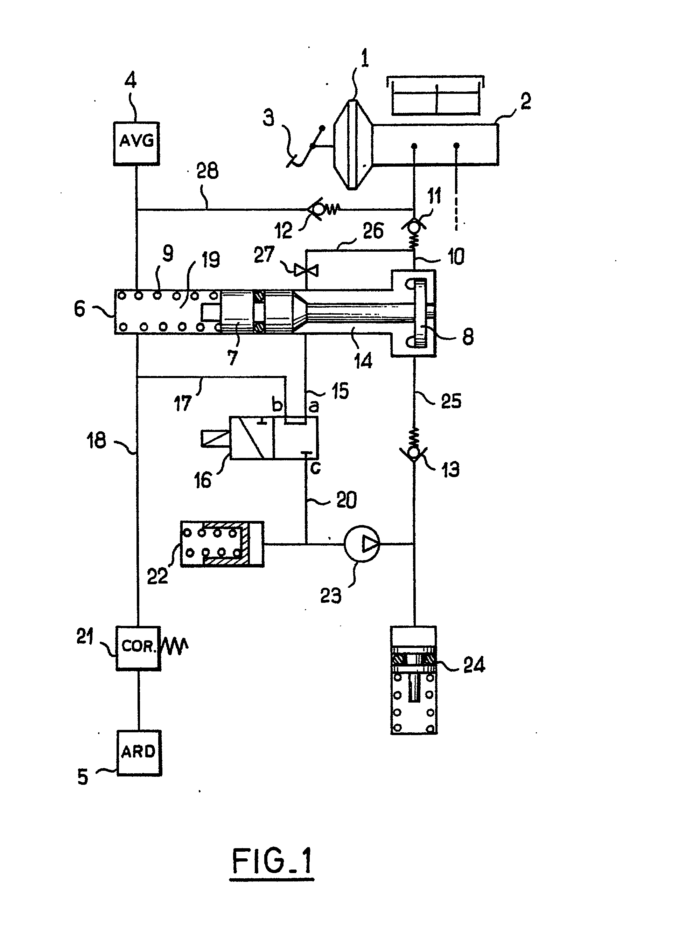

On se réfère à la Figure 1 où le circuit de freinage représenté est constitué de deux demi-circuits parfaitement symétriques. On ne décrira donc dans la suite qu'un seul de ces demi-circuit. Classiquement chaque demi-circuit commande le freinage de deux roues croisées du véhicule soit, par exemple, le roue avant gauche et la roue arrière droite pour l'un des demi-circuits. Le circuit de freinage représenté est en outre du type dans lequel le dispositif d'antiblocage est conçu pour se superposer simplement à un circuit de freinage classique. Celui-ci est associé à un servo-frein 1 et à un maître-cylindre 2, l'ensemble étant commandé par le conducteur au moyen d'une pédale 3. Le demi-circuit que l'on va décrire sert à commander la pression d'un liquide de freinage dans un frein de roue avant gauche 4 et dans un frein de roue arrière droit 5. Le maître-cylindre est raccordé aux freins de roues par des lignes passant par une valve pilotée 6 et par une électrovalve 16 à trois voies et deux positions. La valve pilotée 6 comprend une soupape 7 dont la tête 8 est chargée dans une position d'ouverture par un ressort 9 agissant sur l'extrémité de la soupape qui est opposée à celle qui porte la tête. Le maître-cylindre 2 est connecté à une chambre 14 de la valve, qui entoure la tête de soupape, par une ligne 10. Cette ligne 10 comprend un clapet anti-retour 11 monté de manière à empêcher un retour du liquide de freinage de la valve 6 vers le maître-cylindre 2. La chambre 14 qui enveloppe la tête 8 de la soupape 7 de la valve 6 est connectée par une ligne 15 à l'entrée a d'une électrovalve 16. Cette électrovalve est une électrovalve classique à trois voies et deux positions. Dans l'une des deux positions, l'entrée a est raccordée à l'entrée b elle-même connectée par une ligne 17 à une ligne 18 qui alimente les freins de roues 4 et 5. La ligne 18 passe dans une chambre 19 de la valve pilotée 6, chambre dans laquelle est placé le ressort 9 qui charge la soupape 7. Ainsi la position de la tête de la soupape est-elle commandée, outre par la charge que lui applique le ressort 9, par la différence des pressions régnant dans les chambres 14 et 19. Cette chambre 19 est placée entre la ligne 17 et le frein de roue avant gauche 4. Par ailleurs la ligne 18 alimente le frein de roue arrière droit 5 à travers un correcteur de pression 21 classique.

Lors d'une phase de freinage normal, le conducteur ayant appuyé sur la pédale de frein 3, la pression du liquid de freinage dans le maître-cylindre 2 s'accccroît et cet accroissement de pression est transmis par les lignes 10, 15, 17 et 18 au deux freins de roues 4 et 5 par l'intermédiaire de la valve pilotée 6 alors ouverte et de l'électrovalve 16 en position d'isolement vers l'accumulateur basse pression 22, comme représenté à la Figure.

Le circuit suivant l'invention est muni d'un dispositif d'antiblocage des roues. Ce dispositif comprend un calculateur (non représenté), qui commande la position de l'électrovalve 16. Lorsque le calculateur détecte l'imminence d'un blocage des roues, il commande le passage de l'électrovalve 16 dans une position de détente où les entrées b et c communiquent pour permettre l'écoulement du liquide contenu dans les freins, dans une ligne 20 alors connectée à la ligne 17. Ce liquide est alors reçu dans un accumulateur basse pression 22. Une électropompe 23 reprend ce liquide pour le faire passer dans un accumulateur haute pression 24, connecté à la sortie de la pompe. Les accumulateurs 22 et 24 constituent avec la pompe 23 des moyens de stockage du liquide du circuit. L'accumulateur 24 est raccordé à la chambre 14 de la valve 6 par une ligne 25 dans laquelle est placé un clapet anti-retour 13 qui empêche la circulation du liquide de freinage de la chambre 14 vers l'accumulateur 24. Quand la tête 8 de soupape de la valve 6 est fermée, la chambre 14 est divisée en deux compartiments qui sont raccordés l'un à l'autre par une dérivation 26 qui comprend une restriction 27. Une extrémité de cette dérivation est raccordée au circuit entre la chambre 14 et le clapet anti-retour 11.

Le circuit comprend encore une ligne raccordant directement le maître-cylindre, en amont du clapet 11, à la ligne 18, en amont du frein de roue 4. Cette ligne 28 contient un clapet anti-retour 12 orienté de manière à empêcher un débit de fluide dans cette ligne 28, du maître-cylindre vers la ligne 18. Le rôle du clapet 12 et de la ligne 28 sera explicité dans la suite.

Comme on l'a vu plus haut, lorsque le calculateur détecte l'imminence d'un blocage des roues l'électrovalve 16 passe dans la position "détente" qui permet de délester le liquide des freins dans l'accumulateur basse pression 22. Il y a alors fermeture de la soupape 7 sur son siège sous l'effet de la pression différentielle agissant sur cette soupape. En outre, le calculateur met l'électropompe 23 en route en même temps qu'il fait passer l'électrovalve 16 dans la position "détente". Dès que le calculateur coupe l'excitation de l'électrovalve 16, l'électropompe 23 gave de nouveau le circuit de freinage à travers la chambre 14 de la valve 6 et la restriction 27, l'électrovalve 16 étant alors en position "isolement" qui fait communiquer ses entrées a et b pour alimenter la ligne 18 en liquide de freinage. Comme il est classique, la restriction 27 tempère la remontée en pression du liquide dans le circuit de freinage. Une partie du liquide de freinage est alors reçue dans l'accumulateur haute pression 24.

Quand le calculateur met la pompe en route, le conducteur perçoit un léger enfoncement de la pédale 2. En effet, la pompe 23 met un certain temps pour s'amorcer et le maître-cylindre 2 doit alors fournir à la chambre 14 de la valve 6 le liquide de frein manquant du fait du déplacement de la soupape 7, à travers le clapet anti-retour 11. Après cela, le pression du liquide accumulée dans l'accumulateur 24 agit sur le clapet anti-retour 11 pour fermer celui-ci, ce qui isole le maître-cylindre de toute variation de pression régnant dans le circuit qui se situe en aval du clapet anti-retour 11. La succession alternée d'admissions et de détentes du liquide de freinage n'est plus alors perçue par le conducteur, lors du fonctionnement du dispositif d'anti-blocage.

Le clapet anti-retour 11 étant alors fermé, le retour du liquide de freinage dans le maître-cylindre est assuré par la ligne 28 à travers le clapet anti-retour 12, en fin de période de freinage.

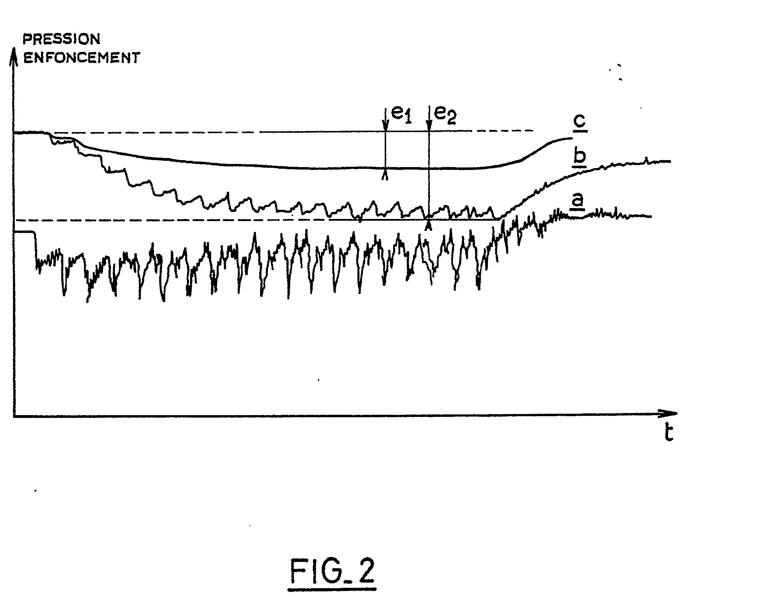

On se réfère aux graphes de la Figure 2, qui permettent d'apprécier l'efficacité des moyens de filtrage des réactions de la pédale de frein qui équipent le circuit de freinage suivant l'invention. Sur cette Figure on a représenté en $a$ l'évolution de la pression dans le frein de roue 4, par exemple, pendant une séquence de fonctionnement en antiblocage, en $b$ l'enfoncement de la pédale de frein 3 quand on utilise un circuit de freinage non perfectionné par la présente invention et en $c$ l'enfoncement de cette même pédale lorsqu'on utilise le circuit de freinage perfoectionné par la présente invention. La comparaison des graphes $b$ et $c$ montre immédiatement que les vibrations de la pédale de frein observées sur le graphe $b$ sont complètement lissées sur le graphe $c$. Le circuit suivant l'invention permet donc de supprimer ces vibrations à la fois désagréables pour le conducteur et dangereuses pour la conduite du véhicule. On observe en outre, sur les graphes $b$ et $c$, que l'enfoncemente $e_1$ de la pédale de frein dans le circuit suivant l'invention, lors d'une séquence de fonctionnement en antiblocage, est considérablement réduit par rapport à celui $e_2$ observé sur la pédale de frein du circuit non perfectionné par la présente invention. Des mesures comparatives réalisées à l'aide d'un circuit conforme à celui de la Figure 1 et d'un circuit semblable mais non perfectionné par l'invention ont permis de relever un enfoncement de piston de maître-cylindre de 1,7 mm avec le circuit perfectionné suivant la présente invention alors qu'on relève un enfoncement correspondant de 4,5 mm lorsqu'on utilise on circuit non perfectionné par la présente invention. L'invention permet donc de réduire considérablement cet enfoncement supplémentaire de la pédale en période de freinage antibloquant, enfoncement dont la perception est aussi désagréable au conducteur.

Dans le mode de réalisation de la Figure 1, le circuit suivant l'invention comprend des clapets 11 et 12 légèrement tarés, (à 0,5 bar par exemple). Les accumulateurs 22 et 24 peuvent être des accumulateurs à ressort.

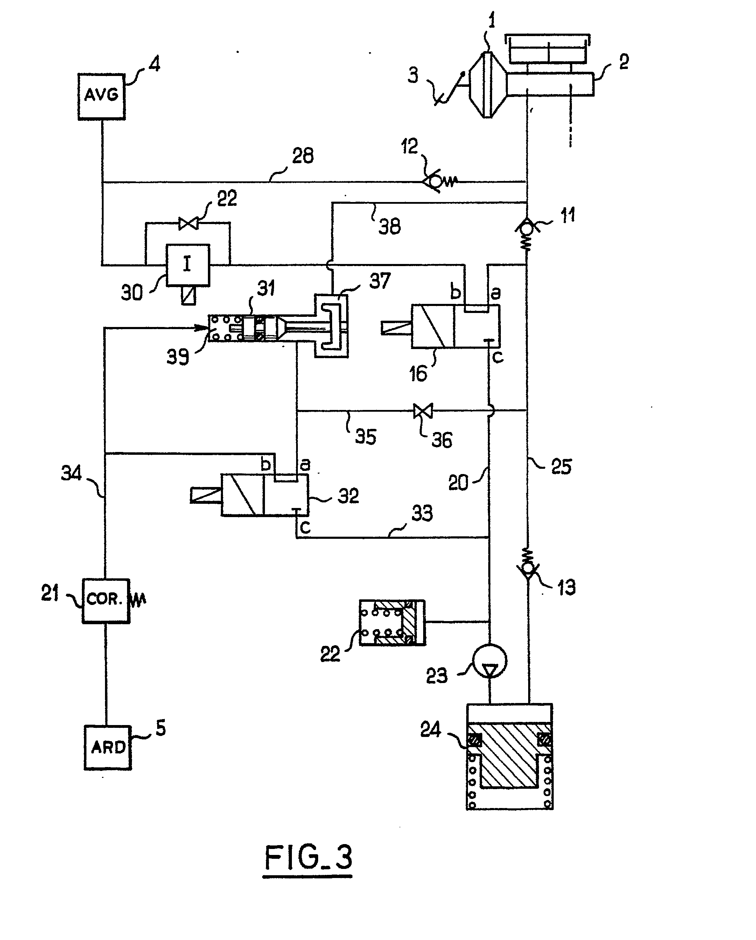

On se réfère maintenant à la Figure 3 où l'on a représenté un deuxième mode de réalisation d'un circuit de freinage perfectionné suivant la présente invention. A cette Figure, les organes du circuit qui sont identiques ou similaires à des organes correspondants du circuit de la figure 1 sont repérés par le même nombre. Le circuit de la Figure 3 étant composé de deux demi-circuits identiques, on ne décrira dans la suite que l'un d'eux. Dans le circuit de la Figure 3, les commandes des freins de roues 4 et 5 sont indépendantes. A cet effet des électrovalves à trois voies et deux positions 16 et 32 sont associées respectivement aux freins de roues 4 et 5.

Le sous-circuit associé au frein de roue 4 comprend essentiellement l'électrovalve 16 et une électrovalve d'isolement 30 commandée par le calculateur du dispositif d'anti-blocage, cette électrovalve 30 permettant une mise en circuit sélective d'une dérivation comprenant une restriction 22. Une telle mise en circuit sélective est particulièrement utile pour moduler plus précisément la pression dans les freins de roues avant. Ces roues étant directrices, il convient de donner le maximum de souplesse au dispositif d'antiblocage de ces roues. Pour le sous-circuit associé au frein de roue 4, les clapets anti-retour 11 et 12 jouent le même rôle que dans le mode de réalisation de la Figure 1.

L'accumulateur de pression 24 comprend une ligne d'entrée 20 et une ligne de sortie 25.

Le sous-circuit associé au frein de roue 5 comprend essentiellement une valve pilotée 31 et l'électrovalve à trois voies et deux positions 32, ainsi que les lignes raccordant le maître-cylindre au frein de roue 5 par l'intermédiaire de ces deux organes. Les orifices de détente $c$ des électrovalves 16 et 32 sont raccordés par les lignes 20 et 33 respectivement à l'accumulateur basse pression 22 et à l'entrée de la pompe 23. Du côté isolement, l'électrovalve 32 est reliée à la ligne 34 d'alimentation du frein de roue 5 par son orifice $b$ tandis qu'elle est reliée par son orifice $a$ d'une part à la ligne 25 par une ligne 35 équipée d'une restriction 36, et d'autre part à la chambre 37 qui enveloppe la tête de la soupape de la valve pilotée 31. Lorsqu'elle est fermée, cette soupape divise cette chambre en deux compartiments. L'un de ces compartiments est raccordé par une ligne 38 au maître-cylindre en amont du clapet anti-retour 11. La fermeture de la soupape coupe la liaison entre cette ligne 38 et la ligne qui raccorde la chambre 37 à l'orifice $a$ de l'électrovalve 32. Le pied de la soupape est chargé par un ressort logé dans une chambre, comme c'est le cas de la soupape 6 du mode de réalisation de la Figure 1. Un piquage permet au liquide de freinage sous pression dans la ligne 34 d'alimenter la chambre 39.

En période de freinage normal, la pression dans le maître-cylindre est transmise au frein de roue 5 par la ligne 38 et la chambre 37 de la valve pilotée 31 d'une part, et par la ligne 35 équipée d'une restriction 36 d'autre part, ainsi que par l'électrovalve 32 qui est alors en position d'isolement. Lorsque le calculateur détecte l'imminence d'une condition de blocage pour la roue associée au frein de roue 5, l'électrovalve passe en position détente, comme dans le mode de réalisation de la Figure 1. En fin de période de freinage, alors qu'il y a relâchement de la pédale 3, il faut cependant assurer le retour du fluide contenu dans le frein de roue 5 vers le maître-cylindre. A cet effet suivant l'invention, la soupape de l'électrovalve 31 s'ouvre sous l'effet de la variation de pression dans la chambre 39, ce qui a pour effet de rétablir la communication entre la ligne 34 et le maître-cylindre par la chambre 37 de l'électrovalve et ligne 38, l'électrovalve 32 étant alors de nouveau en position d'isolement. La valve pilotée 31 joue alors le rôle du clapet 12 associé au sous-circuit d'alimentation du frein de roue 4.

Ainsi, grâce à l'invention, les pulsations de pression du circuit de freinage pendant les phases de freinage avec antiblocage des roues ne sont-elles pas transmises au maître-cylindre, et donc à la pédale de frein. Le confort du conducteur et la sécurité du freinage en sont accrus, ceci à l'aide de modifications peu coûteuses apportées à un dispositif d'antiblocage conçu pour se superposer à un circuit de freinage classique.

**Revendications**

1. Circuit hydraulique de freinage pour véhicule automobile équipé d'un dispositif d'antiblocage de roues, ce circuit comprenant:
   - un maître-cylindre (2) commandé par une pédale, et au moins un frein associé à une roue du véhicule,
   - un élément de filtrage (11) pour isoler le maître-cylindre des pulsations de la pression générées dans le circuit lors du fonctionnement du dispositif d'antiblocage,
   - une électrovalve (16) ayant un premier, un deuxième et un troisième orifices, les premier et deuxième orifices étant connectés pour fermer normalement le circuit de freinage et les deuxième et troisième orifices étant connectés lors, de la commande du dispositif d'antiblocage, pour détendre la pression dans le frein de roue connecté audit deuxième orifice (b) en mettant celui-ci en communication, par l'intermédiaire dudit troisième orifice (c), avec un premier accumulateur (22) et l'entrée d'une pompe (23) dont la sortie est connectée à un deuxième accumulateur (24) et audit élément de filtrage (11), la pompe étant mise en route par le dispositif de commande d'anti-blocage en même temps que l'électrovalve (16), de manière que la pression du fluide dans le deuxième accumulateur (24) provoque la fermeture du clapet (11) et donc l'isolement du maître-cylindre, ledit circuit étant caractérisé en ce qu'il comprend une valve pilotée (6, 31) sensible à la détente de la pression dans ledit frein de roue, ladite valve pilotée (6, 31) comprenant une soupape (7) ayant une tête (8) et une extrémité opposée à ladite tête, et définissant une première chambre (19, 39) où se trouve un ressort (9) qui charge ladite soupape (7) vers la position d'ouverture, ladite première chambre (19, 39) communiquant avec ledit frein de roue et avec ledit deuxième orifice (b) de ladite électrovalve (16), et une seconde chambre (14, 37) que ladite tête (8) de ladite soupape (7) en position de fermeture sur son siège partage en un premier et un second compartiments, ledit premier compartiment dont la section efficace sur ladite soupape (7) est supérieure à celle dudit second compartiment, étant relié audit maître-cylindre, et ledit second compartiment étant relié audit premier orifice (a) de ladite électrovalve (16), une restriction étant prévue entre ledit deuxième accumulateur (24) et ledit second compartiment de ladite seconde chambre.

2. Circuit hydraulique selon la revendication 1 caractérisé en ce que ledit élément de filtrage (11) est un clapet anti-retour.

3. Circuit hydraulique selon la revendication 1 caractérisé en ce que ledit premier compartiment est relié audit maître-cylindre par l'intermédiaire dudit élément de filtrage (11), et audit deuxième accumulateur (24), et que lesdits premier et second compartiments sont reliés ensemble par l'intermédiaire de ladite restriction (27).

4. Circuit hydraulique selon la revendication 3 caractérisé en ce que ledit élément de filtrage (11) est un premier clapet anti-retour et qu'un deuxième clapet anti-retour (12) est placé dans une branche du circuit connectée entre ledit frein de roue et ledit maître-cylindre de manière à permettre le retour du liquide vers le maître-cylindre par l'intermédiaire dudit deuxième clapet anti-retour (12).

5. Circuit hydraulique selon la revendication 1 ou 3 caractérisé en ce que ledit élément de filtrage (11) est constitué par une restriction.

**Patentansprüche**

1. Hydraulischer Kraftfahrzeugbremskreis mit einer Antiblockiereinrichtung für die Räder, wobei dieser Bremskreis umfaßt:
   - einen von einem Pedal aus gesteuerten Hauptzylinder (2) und mindestens eine einem Rad des Fahrzeugs beigeordnete Bremse,
   - ein Filterelement (11) zur Isolierung des Hauptzylinders von den im Bremskreis beim Betrieb des Blockierbehinderers erzeugten pulsierenden Druckschwankungen,
   - ein Magnetventil (16) mit einer ersten, einer zweiten und einer dritten Öffnung, wobei die erste und die zweite Öffnung so geschaltet sind, daß der Bremskreis normal geschlossen ist, und die zweite und die dritte Öffnung so geschaltet sind, daß bei Ansteuerung der Antiblockiereinrichtung der Druck in der Radbremse vermindert wird, die an diese zweite Öffnung (b) angeschlossen ist, indem diese durch besagte dritte Öffnung (c) mit einem ersten Druckspeicher (22) und dem Eingang einer Pumpe (23) in Verbindung gesetzt wird, deren Ausgang an einen zweiten Druckspeicher (24) und an besagtes Filterelement (11) angeschlossen ist, wobei die Pumpe durch die Antiblockiereinrichtung zur gleichen Zeit wie das Elektroventil (16) in Gang gesetzt wird, so daß der Druck der Bremsflüssigkeit im zweiten Druckspeicher (24) die Schließung des Klappenventils (11) und somit die Isolierung des Hauptzylinders bewirkt, wobei dieser Bremskreis dadurch gekennzeichnet ist, daß er eine gesteuerte Ventilvorrichtung (6, 31) enthält, die auf die Druckminderung in dieser Radbremse anspricht, wobei diese gesteuerte Ventilvorrichtung (6, 31) ein Ventil (7) enthält, das einen Teller (8) und ein diesem Teller gegenüberliegendes Endstück hat und eine erste Kammer (19, 39) abgrenzt, in der sich eine Feder (9) befindet, die dieses Ventil (7) zur Öffnungsstellung hin belastet, wobei diese erste Kammer (19, 39) mit besagter Radbremse und mit besagter zweiten Öffnung (b) dieses Magnetventils (16) in Verbindung steht, und eine zweite Kammer (14, 37), die besagter Teller (8) dieses Ventils (7) in Verschlußstellung auf seinem Sitz in ein erstes und ein zweites Abteil unterteilt, wobei dieses erstes Abteil, dessen wirksamer Querschnitt an diesem Ventil (7) größer als derjenige dieses zweiten Abteils ist, mit besagtem Hauptzylinder verbunden ist, und dieses zweite Abteil mit besagter ersten Öffnung (a) dieses Elektroventils (16) verbunden ist, wobei eine Drosselstelle zwischen besagtem zweiten Druckspeicher (24) und diesem zweiten Abteil besagter zweiter Kammer vorgesehen ist.

2. Hydraulischer Bremskreis nach Anspruch 1, dadurch gekennzeichnet, daß das Filterelement (11) ein Rückschlagventil ist.

3. Hydraulischer Bremskreis nach Anspruch 1, dadurch gekennzeichnet, daß das erste Abteil mit dem Hauptzylinder über das Filterelement (11) sowie mit dem zweiten Druckspeicher (24) verbunden ist und daß dieses erste und das zweite Abteil über die Drosselstelle (27) miteinander verbunden sind.

4. Hydraulischer Bremskreis nach Anspruch 3, dadurch gekennzeichnet, daß das Filterelement (11) ein erstes Rückschlagventil ist und daß ein zweites Rückschlagventil (12) in einem zwischen der Radbremse und diesem Hauptzylinder angeschlossenen Zweig des Bremskreises angebracht ist, so daß die Rückkehr der Flüssigkeit zum Hauptzylinder über dieses zweite Rückschlagventil (12) ermöglicht wird.

5. Hydraulischer Bremskreis nach Anspruch 1 oder 3, dadurch gekennzeichnet, daß das Filterelement (11) aus einer Drosselstelle besteht.

**Claims**

1. A hydraulic brake circuit for a motor vehicle equipped with a wheel anti-lock device, this circuit comprising:
   – a master cylinder (2) controlled by a pedal, and at least one brake associated with a wheel of the vehicle,
   – a filter element (11) for isolating the master cylinder from the pressure pulses generated in the circuit during the functioning of the anti-lock device,
   – a solenoid valve (16) having a first, a second and a third port, the first and second ports being connected in order to close the brake circuit normally, and the second and third ports being connected, during the control of the anti-lock device, in order to relieve the pressure in the wheel brake connected to said second port (b) by putting the latter in communication, by means of said third port (c), with a first accumulator (22) and the inlet of a pump (23), the outlet of which is connected to a second accumulator (24) and to said filter element (11), the pump being started up by the anti-lock control device at the same time as the solenoid valve (16), in such a way that the pressure of the fluid in the second accumulator (24) causes the closing of the valve (11) and therefore the isolation of the master cylinder,
   – said circuit being characterized in that it comprises a pilot-controlled valve (6, 31) sensitive to the relief of the pressure in said wheel brake, said pilot-controlled valve (6, 31) comprising a valve (7) having a head (8) and an end opposite said head and defining a first chamber (19, 39), in which is located a spring (9) which loads said valve (7) towards the opening position, said first chamber (19, 39) communicating with said wheel brake and with said second port (b) of said solenoid valve (16), and a second chamber (14, 37) which said head (a) of said valve (7), in the closing position on its seat, divides into a first and a second compartment, said first compartment, of which the effective cross-section on said valve (7) is larger than that of said second compartment, being connected to said master cylinder, and said second compartment being connected to said first port (a) of said solenoid valve (16), a restriction being provided between said second accumulator (24) and said second compartment of said second chamber.

2. Hydraulic circuit according to Claim 1, characterized in that said filter element (11) is a non-return valve.

3. Hydraulic circuit according to Claim 1, characterized in that said first compartment is connected to said master cylinder by means of said filter element (11) and to said second accumulator (24), and in that said first and second compartments are connected together by means of said restriction (27).

4. Hydraulic circuit according to Claim 3, characterized in that said filter element (11) is a first nonreturn valve, and in that a second non-return valve (12) is placed in a branch of the circuit connected between said wheel brake and said master cylinder, so as to allow fluid to return towards the master cylinder by means of said second non-return valve (12).

5. Hydraulic circuit according to Claim 1 or 3, characterized in that said filter element (11) consists of a restriction.

FIG.1

FIG_2

EP 0 283 332 B1

FIG.3